# EUROPÄISCHE PATENTSCHRIFT

(11) **EP 1 715 210 B1**
(45) Veröffentlichungstag und Bekanntmachung des Hinweises auf die Patenterteilung: **01.09.2010**
(21) Anmeldenummer: 06004428.6
(22) Anmeldetag: 04.03.2006
(51) Int. Cl.: F16D 23/06

(54) **Rastelement**
Blocking element
Elément de blocage

(30) Priorität: 22.04.2005 DE 102005018899
(43) Veröffentlichungstag der Anmeldung: 25.10.2006
(73) Patentinhaber: Schaeffler Technologies GmbH & Co. KG, 91074 Herzogenaurach (DE)
(72) Erfinder: Spoerl, Marcus, 91126 Rednitzhembach (DE); Martin, Reiner, 96178 Pommersfelden (DE)

(56) Entgegenhaltungen:
- EP-A- 1 408 250
- DE-A1- 10 225 269
- DE-A1- 10 228 499
- DE-C- 935 768
- FR-A- 2 306 367
- US-A1- 2004 154 892

## Beschreibung

### Gebiet der Erfindung

Die Erfindung betrifft ein Rastelement zum Verrasten an einem Getriebeteil in wenigstens einer Stellposition, wobei das Rastelement aufweist:
- einen Grundkörper mit einem Boden,
- das Rastelement seitlich begrenzende Wände,
- eine Kappe mit einer vom Boden wegweisenden Auswölbung, wobei die Kappe in Druckrichtung vom Grundkörper versetzt angeordnet und zu diesem in Druckrichtung längsbeweglich ist,
- ein Federelement, das sich an Grundkörper und Kappe abstützt, von diesen wenigstens teilweise eingekapselt ist und damit gegen das Getriebeteil vorspannt.

### Hintergrund der Erfindung

Es ist dem Fachmann bekannt, dass derartige Rastelemente in verschiedenen Anwendungen der Schaltgetriebe von Kraftfahrzeugen eingesetzt sind. Sie arretieren z. B. als Arretierungen bewegliche Getriebeelemente in Schalt- oder Wählpositionen, so dass diese Getriebeelemente, beispielsweise trotz Erschütterungen während des Fahrbetriebs, in den vorgegebenen Stellpositionen verbleiben. Derartige Getriebeelemente sind z. B. dreh- und längsverschiebbare Schaltwellen, längsverschiebbare Schaltschienen und schwenkbare Schattbolzen. Die Arretierungen sind dabei gegen eine Rastkontur vorgespannt, deren Oberfläche in der Regel durch die Kontur eines Rastgebirges mit Erhöhungen und Vertiefungen beschrieben ist. In den vorgegebenen Wähl- bzw. Schaltpositionen verrastet die Arretierung in einer der Vertiefungen des Rastgebirges und hält das Getriebeelement in dieser Position. In der Vergangenheit war die Fachwelt bestrebt, in handgeschalteten Getrieben besonders für die letztgenannten Anwendungen Arretierungen einzusetzen, bei denen in aufwändiger Weise längsbeweglich wälzgelagerte Arretierbolzen mit einer kugelgelagerten Arretierkugel in einem Gehäuse der Arretierung eingesetzt sind. Mit dem Einsatz derartig wälzgelagerter Arretierungen sollte und soll das von der Bedienperson am Handschalthebel beim Wählen und Schalten deutlich spürbare an der Oberfläche der gegen die Arretierung bewegten Getriebeelemente erzeugte Hakeln gemindert werden. Mit dem immer häufigeren Einsatz von hilfskraftbetätigten bzw. automatisierten Schaltgetrieben ist die Verwendung derartiger relativ kostspieliger Arretierungen oftmals nicht mehr notwendig. In ihrer Ausführung einfachere, jedoch robuste und kostengünstig herzustellende Arretierungen sind zunehmend gefragt.

Arretierungen sind weiterhin auch in den bekannten Schaltkupplungen vorgesehen, die für das drehfeste Verbinden von Gangrädern mit einer Getriebewelle beim Schalten von Gängen eingesetzt sind. Die Schaltmuffe dieser Schaltkupplungen ist auf dem Schaltmuffenträger zumeist in einer neutralen Position mittels der Arretierung gehalten. In dieser Stellposition sind gegen die Schaltmuffe drei bis vier am Umfang des Schaltmuffenträgers angeordnete und an dem Schaltmuffenträger gehaltene Arretierungen vorgespannt. Dazu stützen sich die Arretierungen an dem Schaltmuffenträger ab und greifen in Rastvertiefungen an der Schaltmuffe. Weiterhin sind in als Synchronkupplung ausgebildeten Schaltkupplungen auch Rastelemente in Form von Druckstücken eingesetzt. Die Druckstücke sitzen längsverschiebbar in einem Schaltmuffenträger. Die in dieser Anwendung eingesetzten Arretierungen oder Druckstücke bzw. Kombinationen aus Arretierungen und Druckstücken sind relativ einfach gestaltet und unter anderem auch durch blattfederartige bzw. bügelartige flache Federelemente gebildet. Diese lassen eine geringe Bauhöhe zu. Der Schaltmuffenträger ist mit Aufnahmen geringer radialer Tiefe für diese Arretierungen versehen. Die Stabilität des Trägers, insbesondere die Steifigkeit seiner Körperstruktur ist aufgrund der Ausnehmungen geringer Tiefe nur relativ geringfügig nachteilig beeinflusst.

Ein Rastelement in Form eines Druckstücks ist in DE 102 25 269 A1 beschrieben. Ein Grundkörper des Rastelementes aus Blech ist schalenförmig mit einem quer zur Druckrichtung ausgerichteten Boden und Wänden ausgebildet, wobei der Grundkörper durch eine in Druckrichtung gegenüberliegenden Kappe abgedeckt ist. Die Kappe ist zu dem Grundkörper in Druckrichtung längs begrenzt beweglich an dem Grundkörper gehalten, wobei der Rand der Kappe über den Grundkörper gestülpt ist. Ein bügelartiges Federelement ist von dem Grundkörper und der Kappe eingekapselt und gegen diese vorgespannt. Der Grundkörper stützt sich an einem Schaltmuffenträger ab, wobei das Federelement gegen eine auf dem Schaltmuffenträger sitzende Schaltmuffe vorgespannt und in einer Rastvertiefung verrastet ist. Bei einer Schaltbewegung nimmt die Schaltmuffe das Druckstück zunächst in Richtung des zu schaltenden Gangrades längs mit, wodurch der bekannte Synchronisationsprozess eingeleitet ist. Größerer axialer Widerstand auf das Rastelement bei weiter in Richtung des Gangrads längsbewegter Schaltmuffe zwingt das Federelement aus der Rastvertiefung an der Schaltmuffe in Richtung des Grundkörpers einzufedern. Das Federelement schnappt wieder in die Rastvertiefung ein, wenn die Schaltmuffe in die neutrale Stellposition zurückgeführt wird. Nachteilig an der an sich zufriedenstellenden Lösung ist, dass das Rastelement, insbesondere wenn diese auch als Druckstück eingesetzt ist, bei schräg eingeleiteten Kräften verkippen kann. Durch ein Verkippen der Kappe kann es zu einer Verklemmung oder einer Verhakung zwischen Schaltmuffenträger und Schaltmuffe kommen. Des Weiteren ist es erforderlich, die Bauhöhe des Rastelements weiter zu verringern, um eine möglichst hohe Stabilität des Schaltmuffenträgers zu erreichen.

Die gattungsbildende EP 1 408 250 A1 zeigt ein Rastelement mit einer federbelasteten Kugel, die durch eine Lochplatte an dem Grundkörper des Rastelements gehalten wird. Die Lochplatte ist zum Grundkörper des Druckstücks verschiebbar. Bei einem relativ langen Verschiebeweg kann die Lochplatte verkippen und somit in ihrer Funktion beeinträchtigt sein.

DE 102 28 499 A1 zeigt eine Synchronisation, bei der anstatt einzelner Rastelemente in dem Synchronkörper Aufnahmen für Federn angeordnet sind, durch welche Druckkörper gegen ein Gegenbauteil vorgespannt werden können. Die Montage ist schwierig, da die vielen Einzelteile nicht verliersicher gehalten sind.

FR 2 306 367 A1 zeigt ein Rastelement, das zur Verhinderung von Getrieberasseln eine Keilform aufweist und relativ massiv gestaltet ist.

### Zusammenfassung der Erfindung

Die Aufgabe der Erfindung ist es, ein Rastelement in Form eines Druckstücks oder einer Arretierung zu schaffen, das auch gegenüber schräg eingeleiteten Kräften robust ist, das eine geringe Bauhöhe aufweist und das sich kostengünstig herstellen lässt.

Diese Aufgabe ist nach dem Gegenstand der kennzeichnenden Teile der Ansprüche 1 und 11 gelöst. Dadurch dass sich die Feder nicht in der Ebene der Kappe abstützt, sondern in der Auswölbung, kann unter Verwendung der gleichen Feder wie im Stand der Technik der Bauraum erheblich reduziert werden. Eine Reduzierung der Bauhöhe ermöglicht geringere Aussparungen beispielsweise am Muffenträger, in den das Rastelement eingesetzt wird, wodurch es möglich wird, höhere Drehmomente zu übertragen.

Die relativ kleinen und bei ihrer Montage unhandlichen Federelemente sind verliersicher in dem Rastelement eingekapselt und damit einfach und sicher zu montieren. In dem durch die Kappe und den Grundkörper gebildeten Käfig sind, bei unveränderter Abmessung der Hülle, Federelemente mit den unterschiedlichsten Federcharakteristiken einsetzbar. Damit ist das Rastelement bei gleicher Außenabmessung an die unterschiedlichsten anwendungsspezifischen Anforderungen anpassbar. In einer vorteilhaften Weiterbildung der Erfindung ist das Federelement als eine spiralförmige Druckfeder ausgebildet, welche besonders kostengünstig herzustellen ist und deren Federkonstante kann sehr flexibel eingestellt werden kann. Sie überträgt höhere Kräfte als beispielsweise Blattfedern, kann dadurch kleiner dimensioniert werden, was den benötigten Bauraum zusätzlich verringert.

In einer weiteren Ausführungsform ist die Druckfeder gegen die Auswölbung vorgespannt. Die Kappe wird dabei durch den Federdruck verliersicher gegen den Grundkörper gespannt und gehalten, so dass das Rastelement auch im unbelasteten Zustand nicht in seine Einzelteile zerfällt.

In einer weiteren vorteilhaften Variante sind die Lage und Ausrichtung der Federelemente in dem Druckstück durch eine Führung bzw. eine Befestigung dieser in dem Grundkörper abgesichert. Dazu ist das Federelement in dem Grundkörper beispielsweise von zwei sich gegenüberliegenden Seitenwänden des Grundkörpers eingefasst, so dass ein Verkippen und Verdrehen des Federelements aus seiner vorbestimmten Lage nicht möglich ist. Weiter ist vorgesehen, dass das Federelement sich auf einem in Richtung der Kappe aus dem Material des Bodens durchgestellten und dabei dornartig in die Arretierung ragenden hohlen Ansatz sitzt. Das Federelement ist dazu auf dem Ansatz aufgesteckt oder aufgepresst. Gleichzeitig ist das Federelement wiederum zwischen zwei sich gegenüberliegenden Seitenwänden des Grundkörpers seitlich geführt und gestützt. In besonders vorteilhafter Weise ist die Auswölbung auch derart dem Federelement angepasst, dass das Federelement auch durch die Auswölbung geführt wird.

Die Vorspannung des auf die Kappe wirkenden Federelements ist durch die Bauart beeinflusst. Andererseits ist die Vorspannung auch durch die Bauhöhe des Rastelementes und durch den freien Stützabstand der Feder zwischen dem Grundkörper und den Stützflächen der Kappe regelbar. Insbesondere dann, wenn die Bauhöhe des Rastelements aus anderen funktionellen Gründen festgelegt ist und dabei der Stützabstand in dem Rastelement für das Federelement zu groß ist, ist der Stützabstand durch eine podestartig aus dem Boden in das Rastelement ragende Ausformung am Boden des Druckstückes einstellbar.

In einer vorteilhaften Weiterbildung der Erfindung ist der Grundkörper des Rastelementes schalenförmig mit einem quer zur Druckrichtung ausgerichteten Boden und mit von dem Boden abgewinkelten abgehenden Wänden wannenförmig ausgebildet. Die Kappe ist vorzugsweise ein ebenes Blechstück, das in seiner Mitte eine nach außen weisende Auswölbung besitzt, wobei nach außen gerichtet die entgegen gesetzte Richtung der extern eingeleiteten Kraft bezeichnet. Er ist zu dem Grundkörper in Druckrichtung längs begrenzt beweglich an dem Grundkörper gehalten, wobei die Grenzen durch die die Vorsprünge einerseits und durch eine minimale Höhe eines Federelements, das zwischen der Kappe und dem Boden angeordnet ist, andererseits bestimmt sind. Das Federelement ist von dem Grundkörper und der Kappe wenigstens teilweise eingekapselt, wobei es sich an dem Grundkörper abstützend gegen die Kappe vorgespannt ist. Die Kappe ist in Druckrichtung des Federelementes beweglich an dem Grundkörper befestigt. Es ist dabei zusätzlich von Vorteil, die Kappe und den Grundkörper an den zueinander gewandten Rändern mit quer zur Druckrichtung der Feder abgehenden Formelementen wie Borden oder Noppen zu versehen, die sich in Druckrichtung gesehen hintergreifen und nach dem Erreichen des maximalen Hubes der Kappe in Druckrichtung aneinander liegen, wodurch die Kappe an dem Grundkörper gehalten ist.

In einer nächsten vorteilhaften Ausgestaltung der Erfindung ist das Federelement durch den wannenförmigen Grundkörper und die öffnungsseitig des Grundkörpers in diesen eingesetzte Kappe in der Arretierung eingekapselt. Der Grundkörper und das Federelement sind separat gefertigte Einzelteile mit aneinander angepasster hohlzylindrischer Form oder weisen bevorzugt eine einseitig geöffnete hohle, sowie annähernd quader-, würfel- und trapezförmige bzw. eine andere beliebige geometrische hohle Gestalt auf. Sowohl der Grundkörper als auch die Kappe sind einfache und insbesondere in der Großserien- und Massenproduktion kostengünstig herstellbare Umformteile aus Blech oder aus Kunststoff. Sie schützen während des Schaltprozesses das Federelement vor Kräften, die sich nachteilig auf die Lebensdauer und Funktion des Federelementes auswirken könnten. Das ist insbesondere dann von Vorteil, wenn die Rastelemente als Druckstücke in den vorgenannten Schaltkupplungen mit Synchronisationen eingesetzt sind. Die Kappe ersetzt den üblicherweise in den bekannten Arretierungen bzw. Druckstücken eingesetzten Rastbolzen und läuft mit der Auswölbung an der Rastkontur des Rastgebirges bzw. an der Verzahnung der Schaltmuffe ab bzw. verrastet in den dafür bestimmten Rastvertiefungen der Schaltmuffe. Der Grundkörper weist an seinen Wänden öffnungsseitig Vorsprünge auf. Sie sind vorzugsweise so nach innen abgewinkelt, dass sie zum Boden parallele Stegflächen bilden. Sie gewährleisten dann, dass die Kappe, auf die Kräfte schräg einwirken, sich nicht nur punktuell, sondern an einer Kante abstützen kann, was den Kräftefluss optimiert, da Kraftspitzen reduziert werden und insgesamt dünneres Material verwendet werden kann. Von außen schräg wirkende Kräfte können die Kappe zwar verkippen, die Verkippung erfolgt jedoch innerhalb des Rastelements, so dass eine Verklemmung zwischen Schaltmuffe und Schaltmuffenträger ausgeschlossen ist.

In einer weiteren Ausgestaltung weisen die als Stegflächen ausgebildeten Vorsprünge in einem Zentralbereich eine Ausnehmung auf oder sind unterbrochen, so dass insgesamt vier Stegflächen vorhanden sind. Der Zentralbereich bezeichnet dabei den im zusammengesetzten Zustand an die Auswölbung der Kappe anschließenden Bereich. Die Auswölbung der Kappe kann in diesem Fall sich über die gesamte Breite des Rastelements erstrecken und den Bauraum optimal nutzen.

Besonders leicht ist das Rastelement, wenn entweder die Kappe oder der Grundkörper oder beide aus Kunststoff hergestellt sind. Gegenüber Metall wird dadurch die Masse reduziert.

Schließlich ist mit Ausgestaltungen der Erfindung vorgesehen, dass die Rastelemente der vorher beschriebenen Bauart und ihrer Ausgestaltungen in einer Schaltkupplung eingesetzt sind, wobei die Rastelemente in den Schaltkupplungen mit Synchronisierung bevorzugt als Druckstücke ausgelegt sind.

Um die Kappe in das Rastelement einzusetzen, ist erfindungsgemäß vorgesehen, dass das Federelement auf dem Boden des Grundkörpers vormontiert wird und dann die Kappe durch seitliches Verschieben in den Grundkörper eingeschoben wird, bis das Federelement in die Auswölbung der Kappe ragt.

Eine zweite Möglichkeit, ist es, nach Vormotage des Federelements den Deckel in die Enden der Wände des Grundkörpers einzuclipsen. Dadurch sind keine Ausnehmungen der Vorsprünge erforderlich, was den Herstellungsprozess des Rastelements vereinfacht. Die eingeclipste Kappe ist dabei durch die Wände des Grundkörpers verliersicher gehalten.

### Kurze Beschreibung der Zeichnungen

Die Erfindung ist nachfolgend anhand von Ausführungsbeispielen näher erläutert. Es zeigen:
- Figuren 1a und 1b: eine Anwendung eines Ausführungsbeispiels der Er- findung in einer Schaltkupplung mit einer Synchro- nisiereinheit im Schnitt, wobei Figur 1a die Schalt- muffe in ihrer neutralen Position und Figur 1b die Schaltmuffe in einer geschalteten Stellung zeigt,
- Figur 2: einen Längsschnitt der Arretierung bzw. des Druck- stücks nach Figur 1
- Figur 3: die Arretierung aus Figur 2 entlang der Linie III-III,
- Figur 4: die Arretierung aus Figur 2 in Aufsicht.

### Detaillierte Beschreibung der Zeichnungen

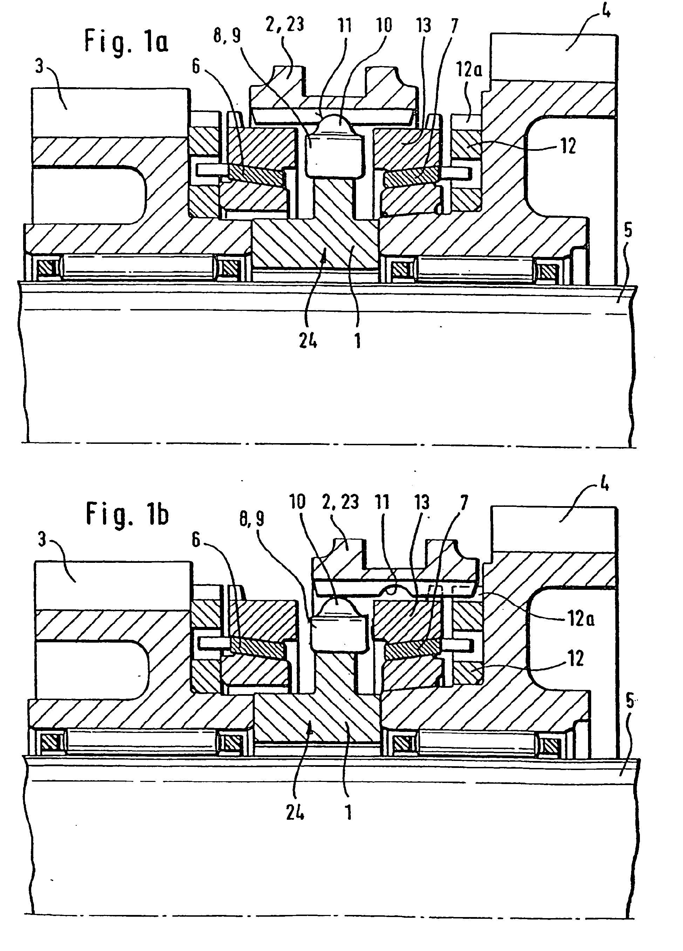

Die Figuren 1 a und 1b zeigen eine Synchronkupplung 24 aus einem Muffenträger 1 und aus einer Schaltmuffe 2 zum wahlweisen Kuppeln der Gangräder 3 und 4. Die Gangräder 3, 4 sind drehbar aber längs fest auf einer Schaltwelle 5 gelagert. Der Muffenträger 1 sitzt verdrehfest sowie längs fest auf der Schaltwelle 5 und trägt auf seinem Außenumfang das Getriebeteil 23 in Form der Schaltmuffe 2. Die Schaltmuffe 2 ist mittels einer Verzahnung drehfest zu dem Muffenträger 1 und damit zur Schaltwelle 5 aber längs wahlweise in Richtung eines der Gangräder 3 oder 4 verschiebbar auf dem Muffenträger 1 angeordnet. An jeder Seite des Muffenträgers 1 ist längs zwischen dem Muffenträger 1 und dem Gangrad 3, 4 jeweils ein Satz 6, 7 Synchronringe angeordnet.

Der Muffenträger 1 nimmt an seinem Umfang mindestens drei Rastelemente 8 auf, wobei das Rastelement 8 hier nur schematisch dargestellt ist und in den nachfolgenden Figuren detailliert dargestellt ist. Das Rastelement 8 verrastet an der Schaltmuffe 2 in ihrer neutralen Stellposition nach Figur 1a. Das Rastelement 8 ist als ein Druckstück 9 ausgelegt. In der neutralen Stellposition stützt sich das Rastelement 8 an dem Muffenträger 1 radial ab und spannt mit einer Kappe 10 gegen die Schaltmuffe 2 vor. Dabei greift das Rastelement 8 mit der Kappe 10 in eine Rastvertiefung 11 an der Schaltmuffe 2 ein.

Die aus der neutralen Stellposition nach Figur 1 a in die geschaltete Position (Figur 1b) längs auf dem Muffenträger 1 verschobene Schaltmuffe 2 greift in eine Kupplungsverzahnung 12a einer mit dem Gangrad 4 fest verbundenen Kupplungsscheibe 12 ein. Die Schaltwelle 5 ist über den Muffenträger 1 und die Schaltmuffe 2 mit dem Gangrad 4 drehfest verbunden, wodurch der dem Gangrad 4 zugeordnete Gang geschaltet ist. Bei der Schaltbewegung der Schaltmuffe 2 in die geschaltete Position nimmt die Schaltmuffe 2 zunächst das in die Rastvertiefung 11 eingreifende Rastelement 8 längs mit und verschiebt das Rastelement 8 gegen den äußeren Synchronring 13 des Satzes 7. Der Prozess der Vorsynchronisation ist eingeleitet.

Die weiter in Richtung der Kupplungsverzahnung 12a bewegte Schaltmuffe 2 zwingt die Kappe 10 des sich an dem äußeren Synchronring 13 abstützenden Druckstücks 9 aus der Rastvertiefung 11. Die Kappe 10 federt dabei radial ein. Beim Lösen des Ganges bewegt sich die Schaltmuffe 2 aus der Stellung nach Figur 1b zurück in die neutrale Stellposition nach Figur 1a. Dabei greift die mit Vorspannung an der Schaltmuffe 2 anliegende Kappe 10 erneut in die Rastvertiefung 11 ein.

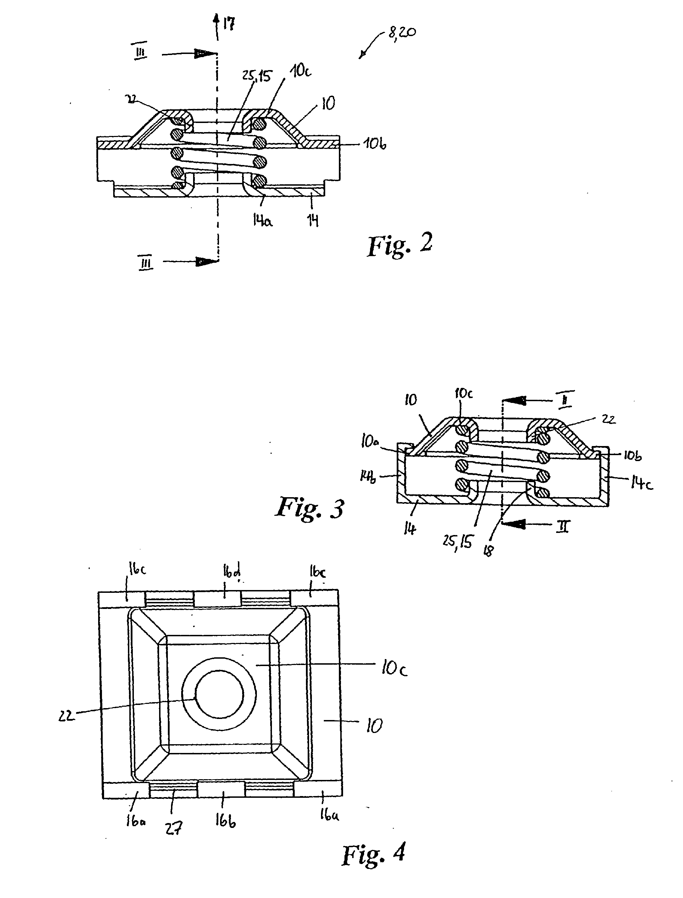

Figuren 2 und 3 zeigen Schnitte durch das Rastelement 8, Figur 4 eine Aufsicht. Das Rastelement 8 besteht aus der Kappe 10 mit einer Auswölbung 10c, einem Grundkörper 14 und einem Federelement 15. Der Grundkörper 14 ist schalenförmig mit einem quer zur mit dem Pfeil 17 gekennzeichneten Druckrichtung ausgerichteten Boden 14a ausgebildet. Von dem Boden 14a sind Wände in Richtung der Kappe 10 abgewinkelt. Von den Wänden 14b, 14c wiederum sind Vorsprünge 16a, 16b, 16c, 16d abgewinkelt. Diese begrenzen die Bewegung der Kappe 10 in Druckrichtung, da die Kappe 10 sich im montierten Zustand durch das Federelement 15 vorgespannt an den Vorsprüngen 16a, 16b, 16c, 16d abstützt. Die Vorsprünge 16a, 16b, 16c, 16d des Grundkörpers 14 sind hier parallel zum Boden 14a ausgerichtet, weisen eine rechteckige Form auf und sind durch Ausnehmungen 27 voneinander getrennt. Dadurch ist eine besonders leichte Montage der Kappe 10 möglich, da nach manuellem Vorspannen des Federelements 15 die Kappe 10 einfach seitlich in das Rastelement 8 eingeschoben werden kann.

Die Kappe 10 weist in der Mitte 26 ihrer Längserstreckung als Stegflächen 25 ausgebildete Vorsprünge 16a, 16b, 16c, 16d, welche teilweise unterbrochen sind. Weil hier auch die Ausnehmungen 27 der Vorsprünge 16a, 16b, 16c, 16d angeordnet sind, steht dadurch für die Auswölbung 10c die gesamte Breite des Rastelements zur Verfügung, so dass bei Bedarf der Durchmesser der Auswölbung 10c in der Kappeebene der Breite der Kappe 10 entsprechen kann. Dadurch baut das Rastelement 8 besonders schmal. Stützflächen 10a schließen sich seitlich an eine nach außen hervorstehende Auswölbung 10c an die Kappe 10 an. Mit der Auswölbung 10c greift das Rastelement 8 in die Rastvertiefung 11 der Schaltmuffe 2 (Figur 1a) ein. Die Auswölbung kann kalottenförmig sein, aber auch jede andere Form annehmen.

Das Federelement 15 besteht aus einer schraubenförmigen Druckfeder 25, die auf aus dem Boden 14a in Richtung der Auswölbung 10c der Kappe 10 in das Rastelement 8 durchgestellten hohlen Ansatz 18 sitzt. Der Ansatz 18 ist einteilig mit dem Grundkörper 14 ausgebildet. Das Federelement 15 kann mit dem Ansatz 18 form- oder stoffschlüssig verbunden werden. Es ist gegen die Auswölbung 10c der Kappe 10 vorgespannt.

In einer vorteilhaften Weiterbildung der Erfindung weist auch die Kappe 10 in der Mitte 26 ihrer Längserstreckung einen durchgestellten Ansatz 22 auf. Der Ansatz 22 ist einteilig mit der Kappe10 ausgebildet, und das Federelement 15 kann mit dem Ansatz 22 form- oder stoffschlüssig verbunden werden. Es verkippt dadurch nicht und wird auch bei schräg auf das Rastelement 8 eingeleiteten Kräften präzise geführt und kann sich an diesem abstützen.

### Bezugszeichen

- 1: Muffenträger
- 2: Schaltmuffe
- 3: Gangrad
- 4: Gangrad
- 5: Schaltwelle
- 6: Satz
- 7: Satz
- 8: Arretierung
- 9: Druckstück
- 10: Kappe
- 10a: Stützfläche
- 10b: Stützfläche
- 10c: Auswölbung
- 11: Rastvertiefung
- 12: Kupplungsscheibe
- 12a: Kupplungsverzahnung
- 13: äußerer Synchronring
- 14: Grundkörper
- 14a: Boden
- 14b: Wand
- 14c: Wand
- 15: Federelement
- 16a: Vorsprung
- 16b: Vorsprung
- 16c: Vorsprung
- 16d: Vorsprung
- 17: Pfeil
- 18: Ansatz
- 19: Vertiefung
- 22: Ansatz
- 23: Getriebeteil
- 24: Synchronkupplung
- 25: spiralförmige Druckfeder
- 26: Mitte
- 27: Ausnehmung

## Patentansprüche

1. Rastelement (8) zum Verrasten eines ersten Getriebeteils (23) an einem zweiten Getriebeteil (24) in wenigstens einer Stellposition, wobei das Rastelement (8) aufweist:
- einen Grundkörper (14), an dem sich ein Federelement (15) abstützt, wobei das Federelement (15) elastisch in eine Druckrichtung gegen das erste Getriebeteil (23) vorspannt,
- einen quer zur Druckrichtung ausgerichteten, schalenförmigen Boden (14a) des Grundkörpers (14), wobei von dem Boden (14a) abgewinkelt abgehende Wände (14b, 14c) ausgebildet sind,
- eine wenigstens teilweise dem Boden (14a) in Druckrichtung gegenüberliegende Kappe (10), die den Grundkörper (14) abdeckt, wobei die Kappe (10) eine von dem Boden (14a) weg weisende sowie aus der Kappe (10) in die Druckrichtung nach außen hervorstehende Auswölbung (10c) aufweist sowie zu dem Boden (14a) in Druckrichtung längsbeweglich an dem Grundkörper (14) verliersicher gehalten ist,
- wobei das Federelement (15) von dem Grundkörper (14) und der Kappe (10) wenigstens teilweise eingekapselt ist und, sich in dem Rastelement (8) an dem Grundkörper (14) abstützend, gegen die Kappe (10) vorgespannt ist, **dadurch gekennzeichnet, dass** sich das Federelement (15) unmittelbar in der Auswölbung (10c) abstützt, wobei die mit der Kappe (10) einteilig ausgebildete Auswölbung (10c) an einer Rastkontur des ersten Getriebeteils (23) verrastbar ist.

2. Rastelement nach Anspruch 1, **dadurch gekennzeichnet, dass** das Federelement (15) als eine schraubenförmige Druckfeder (25) ausgebildet ist.

3. Rastelement nach Anspruch 1, **dadurch gekennzeichnet, dass** das Federelement (15) auf einem aus dem Boden (14a) in Richtung der Kappe (10) durchgestellten sowie in das Rastelement (8) ragenden hohlen Ansatz (18) sitzt

4. Rastelement nach Anspruch 3, **dadurch gekennzeichnet, dass** das Federelement (15) an der in Richtung der Kappe (10) weisenden Innenfläche des Bodens (14a) des Grundkörpers (14) befestigt ist.

5. Rastelement nach Anspruch 4, **dadurch gekennzeichnet, dass** das Federelement (15) mittels einer Nietverbindung an dem Grundkörper (14) befestigt ist.

6. Rastelement nach Anspruch 3, **dadurch gekennzeichnet, dass** der Boden (14a) teilweise podestartig in Richtung der Kappe (10) in das Rastelement (8) ragend durchgestellt ist.

7. Rastelement nach Anspruch 3, **dadurch gekennzeichnet, dass** ein Ansatz (22) der Kappe (10) in das Rastelement (8) ragend durchgestellt ist und dass sich das Federelement (15) an dem Ansatz (22) abstützt.

8. Rastelement nach Anspruch 1, **dadurch gekennzeichnet, dass** der Grundkörper (14) und/oder die Kappe (10) aus Blech und/oder aus Kunststoff hergestellt sind.

9. Rastelement nach Anspruch 1, **dadurch gekennzeichnet, dass** das Rastelement (8) als ein Druckstück (9), das zweite Getriebeteil (24) als eine Synchronkupplung (24) und das erste Getriebeteil (23) als eine Schaltmuffe (2) der Synchronkupplung (24) ausgebildet sind, wobei das an der Schaltmuffe (2) in der Stellposition verrastbare Druckstück (9) zumindest zeitweise mit der Schaltmuffe (2) quer zur Druckrichtung wenigstens begrenzt durch die Schaltmuffe (2) mitbewegbar ist.

10. Rastelement nach Anspruch 1, **dadurch gekennzeichnet, dass** Boden (21a) und Wände (14b, 14c) einteilig ausgebildet sind, dass die Wände (14b, 14c) an ihren dem Boden (14a) abgewandten Seiten nach innen weisende Vorsprünge (16a, 16b, 16c, 16d) aufweisen und dass die Kappe (10) zwischen den Vorsprüngen (16a, 16b, 16c, 16d) und dem Boden (14a) angeordnet ist.

11. Verfahren zur Herstellung eines Rastelements (8) nach Anspruch 1, wobei der Boden (14a) und die Wände (14b, 14c) einteilig ausgebildet sind, die Wände (14b, 14c) an ihren vom Boden (14a) abgewandten Enden nach innen weisende Vorsprünge (16a, 16b, 16c, 16d) aufweisen und die Kappe (10) zwischen den Vorsprüngen (16a, 16b, 16c, 16d) und dem Boden (14a) angeordnet ist, **dadurch gekennzeichnet, dass** in das Federelement (15) in einem ersten Schritt auf dem Boden des Grundkörpers (21) vormontiert wird und in einem zweiten Schritt die Kappe (10) durch seitliches Verschieben in den Grundkörper (14) eingeschoben wird, bis das Federelement (15) in die Auswölbung (10c) der Kappe ragt.

12. Verfahren nach dem Oberbegriff von Anspruch 11, **dadurch gekennzeichnet, dass** in das Federelement (15) in einem ersten Schritt auf dem Boden des Grundkörpers (21) vormontiert wird und in einem zweiten Schritt die Kappe (10) in den Grundkörper (14) so eingeclipst wird, dass die Kappe (10) durch die Vorsprünge (16a, 16b, 16c, 16d) gehalten wird.

## Claims

1. Latching element (8) for latching a first transmission part (23) to a second transmission part (24) in at least one adjustment position, the latching element (8) having:
- a main body (14) against which rests a spring element (15), the spring element (15) bearing elastically, in a pressure direction, with pretensioning against the first transmission part (23),
- a bowl-shaped base (14a) of the main body (14), aligned transversely to the pressure direction, with the formation of walls (14b, 14c) radiating in an angled-off manner from the base (14a),
- a cap (10) which is situated at least partially opposite the base (14a) in the pressure direction and which covers the main body (14), the cap (10) having a bulge (10c) pointing away from the base (14a) and protruding outwards from the cap (10) in the pressure direction, and being held against the main body (14) in a loss-proof manner so as to be movable, longitudinally, relative to the base (14a) in the pressure direction,
the spring element (15) being at least partially encapsulated by the main body (14) and the cap (10) and, resting in the latching element (8) against the main body (14), being pretensioned against the cap (10), **characterized in that** the spring element (15) rests directly in the bulge (10c), the bulge (10c), which is configured in one piece with the cap (10), being latched to a latching contour of the first transmission part (23).

2. Latching element according to Claim 1, **characterized in that** the spring element (15) is configured as a helical compression spring (25).

3. Latching element according to Claim 1, **characterized in that** the spring element (15) is seated on a hollow protrusion (18) which is drawn through from the base (14a) in the direction of the cap (10) and juts into the latching element (8).

4. Latching element according to Claim 3, **characterized in that** the spring element (15) is fastened to the inner surface, pointing in the direction of the cap (10), of the base (14a) of the main body (14).

5. Latching element according to Claim 4, **characterized in that** the spring element (15) is fastened to the main body (14) by means of a rivet joint.

6. Latching element according to Claim 3, **characterized in that** the base (14a) is partially drawn through, jutting in a pod-like manner in the direction of the cap (10) into the latching element (8).

7. Latching element according to Claim 3, **characterized in that** a protrusion (22) of the cap (10) is drawn through so as to jut into the latching element (8) and **in that** the spring element (15) rests against the protrusion (22).

8. Latching element according to Claim 1, **characterized in that** the main body (14) and/or the cap (10) are made of sheet metal and/or or plastic.

9. Latching element according to Claim 1, **characterized in that** the latching element (8) is configured as a pressure piece (9), the second transmission part (24) as a synchronizer clutch (24) and the first transmission part (23) as a gearshift sleeve (2) of the synchronizer clutch (24), the pressure piece (9) which is latchable to the gearshift sleeve (2) in the adjustment position being able to be moved by the gearshift sleeve (2) at least intermittently along with the gearshift sleeve (2) transversely to the pressure direction, at least to some limited extent.

10. Latching element according to Claim 1, **characterized in that** the base (21a) and the walls (14b, 14c) are configured in one piece, **in that** the walls (14b, 14c), on their sides facing away from the base (14a), have inward-pointing projections (16a, 16b, 16c, 16d), and **in that** the cap (10) is disposed between the projections (16a, 16b, 16c, 16d) and the base (14a).

11. Method for producing a latching element (8) according to Claim 1, the base (14a) and the walls (14b, 14c) being configured in one piece, the walls (14b, 14c), at their ends facing away from the base (14a), having inward-pointing projections (16a, 16b, 16c, 16d), and the cap (10) being disposed between the projections (16a, 16b, 16c, 16d) and the base (14a), **characterized in that**, in a first step, the spring element (15) is premounted on the base of the main body (21) and, in a second step, the cap (10) is slid into the main body (14) by lateral displacement until the spring element (15) juts into the bulge (10c) of the cap.

12. Method according to the preamble of Claim 11, **characterized in that**, in a first step, the spring element (15) is premounted on the base of the main body (21) and, in a second step, the cap (10) is clipped into the main body (14) such that the cap (10) is held by the projections (16a, 16b, 16c, 16d).

## Revendications

1. Elément d'encliquetage (8) pour encliqueter une première partie de transmission (23) sur une deuxième partie de transmission (24) dans au moins une position de réglage, l'élément d'encliquetage (8) présentant :
- un corps de base (14), sur lequel s'appuie un élément de ressort (15), l'élément de ressort (15) exerçant une précontrainte élastique dans une direction de pression contre la première partie de transmission (23),
- un fond (14a) du corps de base (14) en forme de coque, orienté transversalement à la direction de pression, des parois (14b, 14c) saillant de manière coudée depuis le fond (14a) étant réalisées,
- un capuchon (10) au moins en partie en regard du fond (14a) dans la direction de pression, qui recouvre le corps de base (14), le capuchon (10) présentant un bombement (10c) détourné du fond (14a) et saillant hors du capuchon (10) dans la direction de pression vers l'extérieur, et étant maintenu de manière imperdable sur le corps de base (14) de manière déplaçable en longueur dans la direction de pression vers le fond (14a),
- l'élément de ressort (15) étant au moins en partie encapsulé par le corps de base (14) et le capuchon (10) et, en s'appuyant dans l'élément d'encliquetage (8) sur le corps de base (14), étant précontraint contre le capuchon (10), **caractérisé en ce que** l'élément de ressort (15) s'appuie directement dans le bombement (10c), le bombement (10c) réalisé d'une seule pièce avec le capuchon (10) pouvant être encliqueté sur un contour d'encliquetage de la première partie de transmission (23).

2. Elément d'encliquetage selon la revendication 1, **caractérisé en ce que** l'élément de ressort (15) est réalisé sous forme de ressort de pression (25) de forme hélicoïdale.

3. Elément d'encliquetage selon la revendication 1, **caractérisé en ce que** l'élément de ressort (15) repose sur une partie (18) creuse passant hors du fond (14a) dans la direction du capuchon (10) et saillant dans l'élément d'encliquetage (8).

4. Elément d'encliquetage selon la revendication 3, **caractérisé en ce que** l'élément de ressort (15) est fixé sur la surface interne du fond (14a) du corps de base (14) tournée dans la direction du capuchon (10).

5. Elément d'encliquetage selon la revendication 4, **caractérisé en ce que** l'élément de ressort (15) est fixé au corps de base (14) au moyen d'une connexion rivetée.

6. Elément d'encliquetage selon la revendication 3, **caractérisé en ce que** le fond (14a) passe en partie sous forme de palier dans la direction du capuchon (10) en saillant dans l'élément d'encliquetage (8).

7. Elément d'encliquetage selon la revendication 3, **caractérisé en ce qu'**une partie (22) du capuchon (10) passe en saillant dans l'élément d'encliquetage (8) et **en ce que** l'élément de ressort (15) s'appuie sur la partie (22).

8. Elément d'encliquetage selon la revendication 1, **caractérisé en ce que** le corps de base (14) et/ou le capuchon (10) sont fabriqués en tôle et/ou en plastique.

9. Elément d'encliquetage selon la revendication 1, **caractérisé en ce que** l'élément d'encliquetage (8) est réalisé sous forme de pièce de pression (9), la deuxième partie de transmission (24) est réalisée sous forme d'embrayage synchrone (24) et la première partie de transmission (23) est réalisée sous forme de manchon de sélection (2) de l'embrayage synchrone (24), la pièce de pression (9) pouvant s'encliqueter sur le manchon de sélection (2) pouvant être entraînée au moins temporairement avec le manchon de sélection (2) transversalement à la direction de pression au moins de manière limitée par le manchon de sélection (2).

10. Elément d'encliquetage selon la revendication 1, **caractérisé en ce que** le fond (21a) et les parois (14b, 14c) sont réalisés d'une seule pièce, **en ce que** les parois (14b, 14c) présentent, sur leurs côtés opposés au fond (14a), des saillies (16a, 16b, 16c, 16d) tournées vers l'intérieur, et **en ce que** le capuchon (10) est disposé entre les saillies (16a, 16b, 16c, 16d) et le fond (14a).

11. Procédé de fabrication d'un élément d'encliquetage (8) selon la revendication 1, dans lequel le fond (14a) et les parois (14b, 14c) sont réalisés d'une seule pièce, les parois (14b, 14c) présentent, à leurs extrémités opposées au fond (14a), des saillies (16a, 16b, 16c, 16d) tournées vers l'intérieur et le capuchon (10) est disposé entre les saillies (16a, 16b, 16c, 16d) et le fond (14a), **caractérisé en ce que** l'élément de ressort (15) dans une première étape est prémonté sur le fond du corps de base (21) et dans une deuxième étape, le capuchon (10) est enfoncé par déplacement latéral dans le corps de base (14), jusqu'à ce que l'élément de ressort (15) fasse saillie dans le bombement (10c) du capuchon.

12. Procédé selon le préambule de la revendication 11, **caractérisé en ce que** l'élément de ressort (15) dans une première étape est prémonté sur le fond du corps de base (21) et dans une deuxième étape, le capuchon (10) est enclipsé dans le corps de base (14), de telle sorte que le capuchon (10) soit maintenu par les saillies (16a, 16b, 16c, 16d).
